Europäisches Patentamt

European Patent Office

Office européen des brevets

(11) Publication number: **0 023 790**
**B1**

(12) **EUROPEAN PATENT SPECIFICATION**

(45) Date of publication of patent specification: 02.05.85

(51) Int. Cl.⁴: **F 16 D 13/50**

(21) Application number: 80302455.3

(22) Date of filing: 21.07.80

(54) Friction clutch.

(30) Priority: 02.08.79 GB 7927000

(43) Date of publication of application:
11.02.81 Bulletin 81/06

(45) Publication of the grant of the patent:
02.05.85 Bulletin 85/18

(84) Designated Contracting States:
AT BE CH DE FR GB IT LI LU NL SE

(56) References cited:
DE-A-1 922 603
DE-A-2 539 474
FR-A-2 096 290
GB-A-1 221 761
US-A-2 885 047
US-A-3 385 409
US-A-3 951 393

(73) Proprietor: Laycock Engineering Limited
Archer Road
Millhouses Sheffield S8 0JY (GB)

(72) Inventor: Senior, Laurence Peter
15, St. Albans Close
Sheffield S10 4DJ (GB)

(74) Representative: Dodd, Graham Marshall et al
Guest Keen and Nettlefolds plc Group Patents
and Licensing Department P.O. Box 55 Ipsley
House Ipsley Church Lane
Redditch Worcestershire B98 0TL (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to friction clutches for automotive vehicles.

A typical friction clutch for an automotive vehicle is intended for use with the engine flywheel and comprises a cover for attachment to and rotation with the flywheel, a pressure plate supported for rotation with the cover, a driven plate arranged between the pressure plate and flywheel, and an annular plate a spring acting between the pressure plate and the cover to urge the pressure plate towards the flywheel to clamp the driven plate between the pressure plate and flywheel to provide a frictional drive from the flywheel and pressure plate to the driven plate. Typically, release fingers intergral with the plate spring extend inwardly from the plate spring and a release means is provided for deflecting the fingers to release the spring load on the pressure plate and thereby disengage the clutch (e.g. US—A—2.885.047).

It is desirable that clutch re-engagement on release of the release means should be gradual over a range of movement of the release means in order to assist the operator in re-engaging the clutch gradually and smoothly. This facility is frequently provided by means of cushioning within the clutch driven plate. For example two friction facings of the driven plate may be urged apart by spring segments so that the clamping load increases gradually as the clutch is engaged.

It has also been proposed to employ a driven plate without cushioning but to employ cushioning within other parts of the clutch — for example between the plate spring and the pressure plate. One advantage of this latter kind of arrangement is that the pressure plate movement required to release the clutch is reduced compared with the movement required to release a cushioned driven plate. However this cushioning tends to add to the cost and complexity of the clutch.

An object of the invention is to provide a simple and effective means whereby controlled clutch engagement can be achieved without cushioning in the driven plate.

According to the invention there is provided a friction clutch for an automotive vehicle for use with an engine flywheel, comprising a cover for attachment to and rotation with the flywheel, a pressure plate supported for rotation with the cover, a driven plate having friction linings directly secured thereto without cushioning means and arranged between the pressure plate and flywheel, a plate spring acting between the pressure plate and the cover to urge the pressure plate towards the flywheel to clamp the driven plate between the pressure plate and flywheel to provide a frictional drive from the flywheel and the pressure plate to the driven plate, integral release fingers extending inwardly from the plate spring, and release means for deflecting the fingers to relieve the spring load on the pressure plate and thereby disengage the clutch, characterised in that the assembly of fingers is so constructed as to be more flexible than the fingers of a conventional diaphragm spring, such that over at least 50% of the nominal release means movement from the fully engaged condition there is no significant pressure plate lift, thereby to cushion clutch engagement.

There is inevitably some degree of flexibility in the fingers of any conventional diaphragm spring and one effect of this flexibility must be to contribute to a range of travel of the release means over which the clutch is gradually engaged or disengaged. However, this flexibility of the fingers has in the past been seen as a disadvantage in a conventional clutch which requires cushioned clutch engagement because the cushioning is provided elsewhere and the finger deflection results in an undesirable increase of pedal travel. As an illustration of this, several attempts have been made previously to increase the stiffness of the fingers in order to restrict finger deflection. Furthermore, in clutches intended for use in competition vehicles, a very positive clutch engagement and disengagement is required so no intentional cushioning is provided. The cushioning which is inevitable as a result of some finger deflection is kept to a minimum by employing conventional stiff fingers.

A conventional diaphragm spring has fingers of the same thickness as the plate spring itself and the number and width of fingers is such as to substantially fill the interior of the disc apart from narrow slots required to separate the fingers. Such springs also incorporate enlargements at the outer ends of the slots to reduce the stress raising effect of the slots and to provide means for locating the spring. There are several possible ways of making the assembly of fingers in a plate spring of a clutch according to the invention more flexible than conventional diaphragm spring fingers.

An alternative way of defining the invention is in relation to the proportion of total travel of the release means during which the fingers are being bent and so reducing the clamp load but during which there is no significant lift of the pressure plate. There is in practice a very small amount of pressure plate lift of the order of 0.02 mm due to the gradual relief of the compression load on the nominally rigid driven plate but from a practical point of view this should not be considered as significant pressure plate lift in comparison with the normal lift of about 0.5 mm or 0.5 mm in addition to the driven plate cushioning. Pressure plate lift of this order is required to produce complete clutch release despite possible irregularities of the driven plate.

In laying down the criteria for a clutch design for a new vehicle, it is common practice for the vehicle manufacturer to specify a range of movements of the release means with which the clutch must be designed to operate satisfactorily. For example, a vehicle manufacturer may design linkage between a clutch pedal and the release means to be such as to give a nominal release means movement of 8 mm and may then specify a range of 7 mm to 9 mm release means movement over which the clutch must operate satisfactorily. With the present invention, the flexibility of the fingers should be such that over at least 50% of the nominal release means movement from the fully engaged condition, there is no significant pressure plate lift.

One possibility for increasing finger flexibility is to remove some of the fingers, for example starting from a diaphragm spring with eighteen fingers, the number could be reduced to nine or six equally spaced fingers. The increase in stress at the roots of the fingers associated with the reduction in the number of fingers may be unacceptable if too many fingers are removed but the increased flexibility may not be sufficient if only a small number of fingers are removed. Thus the actual number of fingers selected for removal must be a compromise between these two situations (Claim 2).

An alternative way of increasing the flexibility of the fingers is to reduce their thickness — for example by grinding. The reduction in thickness required is very small as stiffness is proportional to the third power of the thickness. Again, some compromise is required between sufficient reduction in stiffness and avoiding excessive increases in stress (Claim 3).

A further alternative is to depart from the basic diaphragm spring configuration and employ a small number of fingers which do not have a reduced thickness at their root. The fingers may be parallel sided or may increase in thickness at their root. In this way, a smooth transfer of bending loads from the fingers to the plate spring itself occurs without excessively high localised stresses (Claims 4 and 5).

A further alternative for increasing the flexibility of the fingers is for some fingers to be arranged to engage the release means over the full release movement while other fingers are permanently offset away from the release means in its released condition so that they are not deflected by the release means during initial release movement but said other fingers are engaged by the release means in the region of release travel at which pressure plate lift occurs to increase the effective stiffness of the fingers and thereby provide more positive pressure plate lift (Claim 6).

Embodiments of the invention will now be described by way of example only with reference to the accompanying drawing in which:

Figure 1 is a composite end elevation of a clutch cover assembly, the top half of the figure representing a conventional clutch and the bottom half representing a first embodiment of the invention;

Figure 2 is a composite cross sectional view of a clutch generally as illustrated in Figure 1, the top half of the figure showing a conventional clutch and the lower half of the figure showing a second embodiment of the invention;

Figures 3 and 4 are end elevations and Figure 5 is a cross section of plate springs illustrating further embodiments of the invention; and

Figures 6 and 7 show release load and pressure plate lift characteristics of a range of clutches.

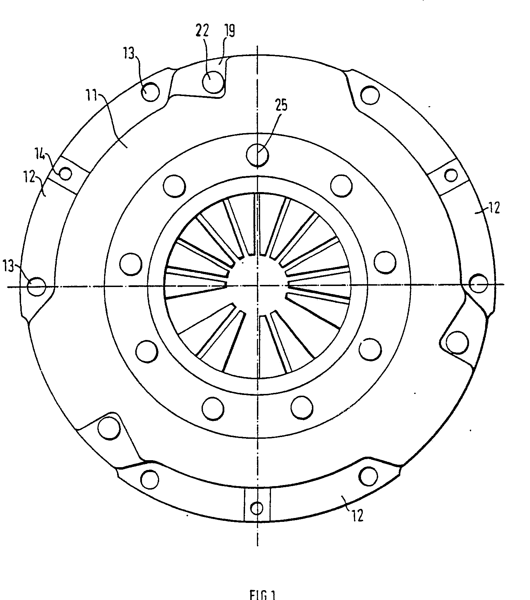

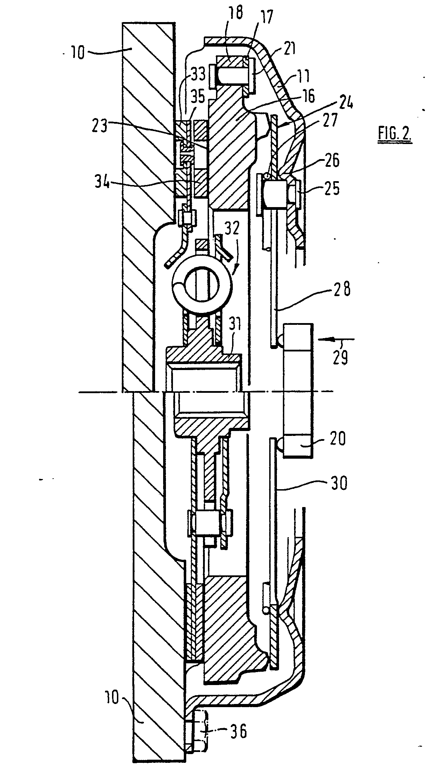

A conventional clutch assembly will first be described briefly with reference to the top half of Figures 1 and 2. The cover assembly of Figures 1 and 2 incorporates a pressed clutch cover 11 which has three equally spaced mounting flanges 12 for securing the cover to an engine flywheel 10 by means of bolts 36 in apertures such as 13 and loating pins in apertures such as 14. The cover is of conventional annular dished shape. An annular cast iron pressure plate 16 is arranged within the cover 11 and is both centred and held against rotation with respect to the cover by three conventional drive straps 17 which extend from externally projecting lugs 18 of the pressure plate to strap mountings 19 on the cover. The straps are simple elongated spring steel straps secured by rivets such as 21 and 22 to the lug 18 and mounting 19 respectively. This mounting of the pressure plate allows axial movement in relation to the cover. The pressure plate has a ground outer surface 23 which acts as a friction face for engagement with a driven plate as will be described subsequently.

A conventional diaphragm spring 24 is mounted by means of a ring of nine rivets 25 to the cover 11. The cover incorporates a pressed fulcrum ridge 26 which co-operates with a round wire fulcrum ring 27 and the rivets 25 to enable the diaphragm spring to pivot about an annular fulcrum line between the fulcrum ring 27 and ridge 26. The outer disc spring portion of the diaphragm spring 24 acts between its fulcrum and the pressure plate 16 to urge the pressure plate in a direction out of the cover towards the flywheel.

The diaphragm spring 24 also incorporates inwardly extending fingers 28. An axial load in the direction of arrow 29 applied to the inner ends of all of the fingers 28 by release means constituted by bearing 20 tends to distort the spring 24 in such a way as to reduce the load applied to the pressure plate and to allow the pressure plate to move further into the cover 11.

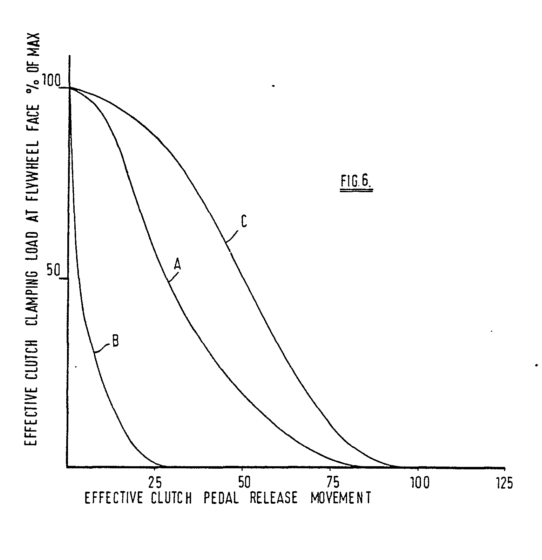

The upper part of Figure 2 shows a conventional clutch driven plate incorporating a hub 31 connected through a torsional vibration damper 32 to annular friction linings 33 and 34. The clutch facings are mounted by means of spring steel segments 35 which are arranged to hold the friction facings 33 and 34 apart as shown. In use, the driven plate is arranged between the pressure plate 16 and the flywheel 10 to which the clutch cover 11 is mounted and when the clutch is in an engaged condition the friction facings 33 and 34 are clamped firmly between the pressure plate and flywheel. In order to release the clutch it is necessary to retract the pressure plate 16 by a distance at least equal to the distance by which the two friction facings spring apart so that the clutch can be fully released. In practice additional release movement of about 0.5 mm is needed to cater for irregularities in the driven plate. This release movement between the fully released and fully engaged condition of the clutch involves a substantial movement of the diaphragm spring fingers 28 and release bearing 20 and during this movement the clutch clamping load is gradually reduced. Curve A in Figure 6 is a typical characteristic showing the gradual reduction in clamping load plotted against effective clutch pedal release movement. In a typical motor car it is normal to restruct clutch pedal movement to about 125 mm which is converted by the clutch linkage to about 10 mm release movement of the release bearing 20. Of the 125 mm about 25 mm should be reserved for lost motion and as a safety margin to ensure that full clutch release can be achieved. During the remaining movement of about 100 mm, it is desirable for the clamp load to increase (or decrease) approximately linearly with pedal travel. Such a linear relationship provides a good compromise for allowing clutch take up during light load level road conditions and heavy load uphill conditions. It can be seen that the typical release curve A varies in inclination to a considerable extent and in particular has a very steep portion in the region of 70% to 80% of maximum clamping load, which represents the clutch take up situation with a heavily loaded vehicle on a steep hill. In Figure 7, Curve a shows the pressure plate lift characteristic of such a conventional clutch. It can be seen that the pressure plate begins to lift after less than 25% of the release movement.

If the cushioning between the two friction facings 33 and 34 is removed, for example by providing a construction as shown in the lower half of Figure 2, clutch engagement and disengagement is much more abrupt but still involves some travel due to inherent flexibility in some parts of the system such as the clutch cover. Curve B in Figure 6 and Curve b in Figure 7 are typical release characteristics for this kind of clutch with no cushioning in the driven plate. Curve b shows that initial lift occurs at well under 50% of the release travel. This is entirely unsatisfactory for most applications in that it results in very abrupt engagement and disengagement of the clutch. It is however, the arrangement often used in clutches for competition vehicles.

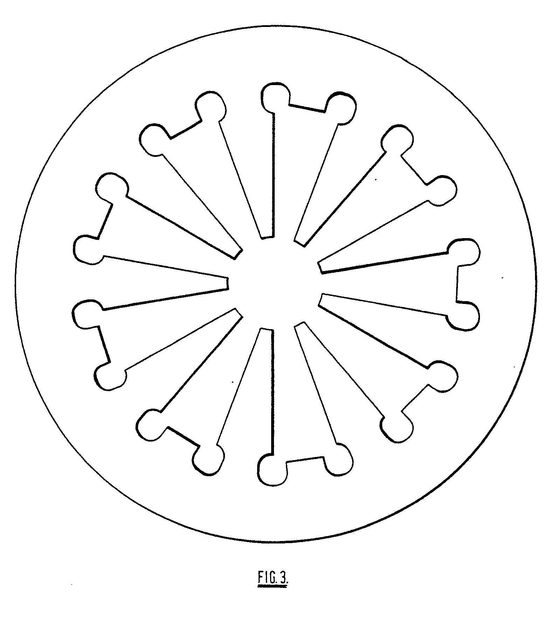

In accordance with the invention additional flexibility is introduced into the clutch system by increasing the flexibility of the fingers as compared with a conventional diaphragm spring. In a first example shown in the lower part of Figure 1, one finger in three has been removed from the diaphragm spring. Such an arrangement produces a clamping load characteristic which is slightly less steep than curve B but it is still too steep for most practical purposes. A further alternative is shown in Figure 3 in which half of the fingers have been removed from the diaphragm spring. This results in a release characteristic which still tends to be steeper than desirable but which can be useful in some circumstances. By removing a suitable number of fingers, the initial lift of the pressure plate can be delayed beyond 50% of the release means movement, for example as shown in Curve d in Figure 7.

A further alternative is shown in the lower part of Figure 2. In Figure 2 the thickness of the fingers 30 has been reduced as compared with the thickness of the outer plate spring by grinding the fingers to the reduced thickness. Such an arrangement can be satisfactory but the grinding operation increases the cost of producing the spring. With a suitable selection of finger thickness, pressure plate lift can be in accordance with Curve d in Figure 7.

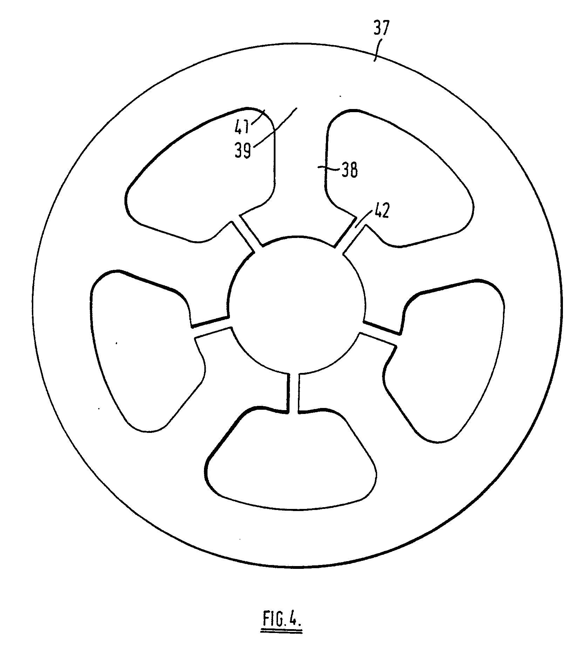

A still further alternative is shown in Figure 4. In this embodiment the spring incorporates an outer annular plate spring portion 37 and five equally spaced parallel fingers 38. The fingers 38 have comparatively wide roots 39 which are further supported by a curved transition at 41 between the finger 38 and the plate spring as such 37. In order to provide a large area of contact for a release bearing or other release means which has to act on the inner ends of the fingers 38, the inner ends of the fingers are expanded laterally so that they occupy almost a complete circle with only narrow slits 42 between adjacent fingers. The characteristics of a clutch such as is shown in Figures 1 and 2 but incorporating an uncushioned driven plate and a plate spring as shown in Figure 4 is shown at C in Figure 6 and c in Figure 7. Curve C approaches more closely to the ideal than does curve A of the conventional clutch so that substitution of a spring as shown in Figure 4 has certain practical advantages in the performance of the clutch. It also enables the much lighter, lower inertia and lower cost construction of an uncushioned driven plate to be used as shown in the lower part of Figure 2. From Figure 7 it can be seen that initial pressure plate lift is delayed to between 70% and 80% of the initial release means movement which is the ideal arrangement as it provides good progressive clutch engagement and disengagement while allowing sufficient lift to ensure complete clutch release.

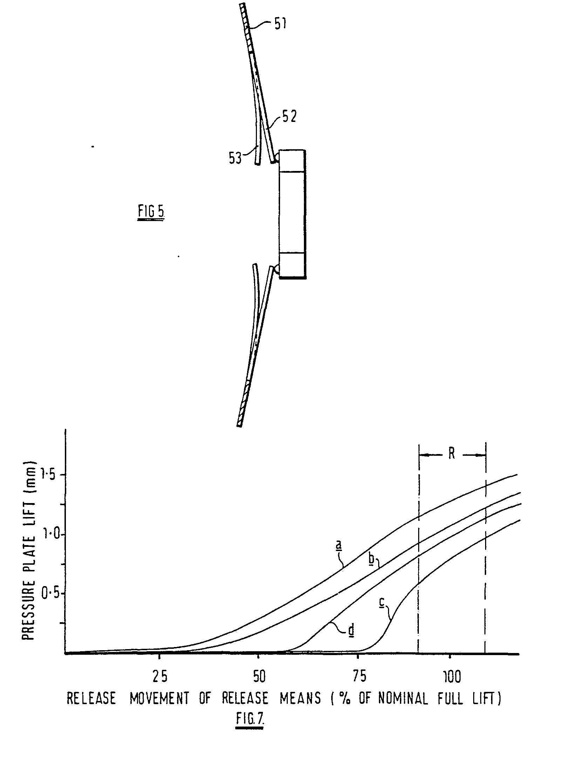

In a still further form of spring in accordance with the invention as shown in Figure 5, all of the diaphragm spring fingers of a conventional diaphragm spring (as shown in the top half of Figure 1) are retained. The spring is shown in its free state in which the outer disc spring part 51 is dished. In a conventional diaphragm spring, all of the fingers follow the conical dish arrangement shown for fingers 52 in Figure 5. The distinctive feature of Figure 5 is that some, for example half of the fingers, are deflected in their free state to the position shown for fingers 53, that is away from the position of the release bearing 20. By bending some fingers away from the release bearing, the effective stiffness of the fingers is reduced, because the number of effective fingers is reduced. The distance by which the fingers 53 are displaced from the fingers 52 should be such that after the extent of release bearing movement which just begins to lift the pressure plate, the release bearing comes into contact with the fingers 53. This distance could for example be 70% of the nominal release bearing movement.

It will be seen that Curve c and Curve d in Figure 7 both give a satisfactory pressure plate lift over a range R of release movements corresponding to the typical range specified by a vehicle manufacturer for his clutches.

## Claims

1. A friction clutch for an automotive vehicle for use with an engine flywheel (10), comprising a cover (11) for attachment to and rotation with the flywheel (10), a pressure plate (16) supported for rotation with the cover (11), a driven plate (31, 32, 35) having friction linings (33, 34) directly secured thereto without cushioning means and arranged between the pressure plate (16) and flywheel (10), a plate spring (24) acting between the pressure plate (16) and the cover (11) to urge the pressure plate (16) towards the flywheel (10) to clamp the driven plate (31, 32, 35) between the pressure plate (16) and flywheel (10) to provide a frictional drive from the flywheel (10) and the pressure plate (16) to the driven plate, integral release fingers (28) extending inwardly from the plate spring (24), and release means (20) for deflecting the fingers (28) to relieve the spring load on the pressure plate (16) and thereby disengage the clutch, characterised in that the assembly of fingers (28) is so constructed as to be more flexible than the fingers of a conventional diaphragm spring, such that over at least 50% of the nominal release means movement from the fully engaged condition, there is no significant pressure plate lift, thereby to cushion clutch engagement (Fig. 7).

2. A friction clutch as claimed in Claim 1 further characterised in that the integral spring (24) and fingers (28) are in the form of a conventional diaphragm spring but with some fingers removed (Fig. 3).

3. A friction clutch for an automotive vehicle for use with an engine flywheel (10), comprising a cover (11) for attachment to and rotation with the flywheel (10), a pressure plate (16) supported for rotation with the cover (11), a driven plate (31, 32, 35) having friction linings (33, 34) directly secured thereto without cushioning means and arranged between the pressure plate (16) and flywheel (10), a plate spring (24) acting between the pressure plate (16) and the cover (11) to urge the pressure plate (16) towards the flywheel (10) to clamp the driven plate (31, 32, 35) between the pressure plate (16) and flywheel (10) to provide a frictional drive from the flywheel (10) and the pressure plate (16) to the driven plate, integral release fingers (30) extending inwardly from the plate spring (24), and release means (20) for deflecting the fingers (30) to relieve the spring load on the pressure plate (16) and thereby disengage the clutch, characterised in that the thickness of the fingers (30) is less than the thickness of the plate spring (24) itself, so that the flexibility of the fingers is such that over at least 50% of the nominal release means movement from the fully engaged condition, there is no significant pressure plate lift.

4. A friction clutch for an automotive vehicle for use with an engine flywheel (10), comprising a cover (11) for attachment to and rotation with the flywheel (10), a pressure plate (16) supported for rotation with the cover (11), a driven plate (31, 32, 35) having friction linings (33, 34) directly secured thereto without cushioning means and arranged between the pressure plate (16) and flywheel (10), a plate spring (37) acting between the pressure plate (16) and the cover (11) to urge the pressure plate (16) towards the flywheel (10) to clamp the driven plate (31, 32, 35) between the pressure plate (16) and flywheel (10) to provide a frictional drive from the flywheel (10) and the pressure plate (16) to the driven plate, integral release fingers (38) extending inwardly from the plate spring (37), and release means (20) for deflecting the fingers (38) to relieve the spring load on the pressure plate (16) and thereby disengage the clutch, characterised in that the spacing between adjacent fingers (38) is greater than the width of the fingers (38) such that over at least 50% of the nominal release means movement from the fully engaged condition, there is no significant pressure plate lift.

5. A friction clutch as claimed in Claim 4 further characterised in that the fingers (38) are parallel sided.

6. A friction clutch for an automotive vehicle for use with an engine flywheel (10), comprising a cover (11) for attachment to and rotation with the flywheel (10), a pressure plate (16) supported for rotation with the over (11), a driven plate (31, 32, 35) having friction linings (33, 34) directly secured thereto without cushioning means and arranged between the pressure plate (16) and flywheel (10), a plate spring (51) acting between the pressure plate (16) and the cover (11) to urge the pressure plate (16) towards the flywheel (10) to clamp the driven plate (31, 32, 35) between the pressure plate (16) and flywheel (10) to provide a frictional drive from the flywheel (10) and the pressure plate (16) to the driven plate, integral release fingers (52, 53) extending inwardly from the plate spring (51), and release means (20) for deflecting the fingers (52, 53) to relieve the spring load on the pressure plate (16) and thereby disengage the clutch, characterised in that some fingers (52) are arranged to engage the release means over the full release movement while other fingers (53) are permanently offset away from the release means in its released condition so that they are not deflected by the release means during initial release movement but said other fingers (53) are engaged by the release means in the region of release travel at which pressure plate lift occurs to increase the effective stiffness of the fingers (52) and thereby provide more positive pressure plate lift, such that over at least 50% of the nominal release means movement from the fully engaged condition, there is no significant pressure plate lift.

## Revendications

1. Embrayage à friction pour un véhicule automobile pour utiliser avec un volant de moteur (10), comportant un couvercle (11) pour fixation au volant et rotation avec ce volant (10), une plaque de pression (16) portée pour tourner avec le couvercle (11); un plateau entraîné (31, 32, 35), comprenant des garnitures de friction (33, 34) qui lui sont directement fixées sans moyens d'amortissement, disposé entre la plaque de pression (16) et le volant (10); un plateau élastique (24) agissant entre la plaque de pression (16) et le couvercle (11) pour pousser la plaque de pression (16) en direction du volant (10) pour brider le plateau entraîné (31, 32, 35) entre la plaque de pression (16) et le volant (10) pour fournir au plateau entraîné un entraînement par friction provenant du volant (10) et de la plaque de pression (16); comportant aussi des doigts de débrayage (28) qui s'étendent vers l'intérieur depuis le plateau élastique (24) et des moyens de débrayage (20) pour faire fléchir les doigts (28) pour supprimer la charge élastique agissant sur la plaque de pression (16) et, par là, débrayer l'embrayage, caractérisé en ce que l'ensemble des doigts (28) est construit de façon à être plus souple que les doigts d'une membrane élastique conventionnelle, de façon que sur au moins 50% de la course nominale des moyens de débrayage, à partir de la condition où ils sont entièrement engagés, il n'y ait pas de mouvement significatif de levée de la plaque de pression, de façon à amortir l'engagement de l'embrayage (figure 7).

2. Embrayage à friction selon la revendication 1, caractérisé en outre en ce que le plateau élastique (24) et les doigts (28), d'une pièce, sont sous forme d'une membrane élastique conventionnelle, mais avec certains doigts enlevés (figure 3).

3. Embrayage à friction pour un véhicule automobile pour utiliser avec un volant de moteur (10), comportant un couvercle (11) pour fixation au volant et rotation avec ce volant (10), une plaque de pression (16) portée pour tourner avec le couvercle (11); un plateau entraîné (31, 32, 35), comprenant des garnitures de friction (33, 34) qui lui sont directement fixées sans moyens d'amortissement, disposé entre la plaque de pression (16) et le volant (10); un plateau élastique (24) agissant entre la plaque de pression (16) et le couvercle (11) pour pousser la plaque de pression (16) en direction du volant (10) pour brider le plateau entraîne (31, 32, 35) entre la plaque de pression (16) et le volant (10) pour fournir au plateau entraîné un entraînement par friction provenant du volant (10) et de la plaque de pression (16); comportant aussi des doigts de débrayage (30) qui s'étendent vers l'intérieur depuis le plateau élastique (24) et des moyens de débrayage (20) pour faire fléchir les doigts (30) pour supprimer la charge élastique agissant sur la plaque de pression (16) et, par là, débrayer l'embrayage, caractérisé en ce que l'épaisseur des doigts (30) est inférieure à l'épaisseur du plateau élastique (24) lui-même, de sorte que la souplesse des doigts est telle que sur au moins 50% de la course nominale des moyens de débrayage, à partir de la condition où ils sont entièrement engagés, il n'y ait pas de mouvement significatif de levée de la plaque de pression.

4. Embrayage à friction pour un véhicule automobile pour utiliser avec un volant de moteur (10), comportant un couvercle (11) pour fixation au volant et rotation avec ce volant (10), une plaque de pression (16) portée pour tourner avec le couvercle (11); un plateau entraîné (31, 32, 35) comprenant des garnitures de friction (33, 34) qui lui sont directement fixées sans moyens d'amortissement, disposé entre la plaque de pression (16) et le volant (10); un plateau élastique (37) agissant entre la plaque de pression (16) et le couvercle (11) pour pousser la plaque de pression (16) en direction du volant (10) pour brider le plateau entraîné (31, 32, 35) entre la plaque de pression (16) et le volant (10) pour fournir au plateau entraîné un entraînement par friction provenant du volant (10) et de la plaque de pression (16); comportant aussi des doigts de débrayage (38) qui s'étendent vers l'intérieur depuis le plateau élastique (37) et des moyens de débrayage (20) pour faire fléchir les doigts (38) pour supprimer la charge élastique agissant sur la plaque de pression (16) et, par là, débrayer l'embrayage, caractérisé en ce que l'intervalle entre les doigts voisins (38) est supérieur à la largeur des doigts (38) de sorte que sur au moins 50% de la course nominale des moyens de débrayage, à partir de la condition où ils sont entièrement engagés, il n'y ait pas de mouvement significatif de levée de la plaque de pression.

5. Embrayage à friction selon la revendication 4, caractérisé en outre en ce que les doigts (38) sont à bords parallèles.

6. Embrayage à friction pour un véhicule automobile pour utiliser avec un volant de moteur (10), comportant un couvercle (11) pour fixation au volant et rotation avec ce volant (10); une plaque de pression (16) portée pour tourner avec le couvercle (11); un plateau entraîné (31, 32, 35), comprenant des garnitures de friction (33, 34) qui lui sont directement fixées sans moyens d'amortissement, disposé entre la plaque de pression (16) et le volant (10); un plateau élastique (51) agissant entre la plaque de pression (16) et le couvercle (11) pour pousser la plaque de pression (16) en direction du volant (10) pour brider le plateau entraîné (31, 32, 33) entre la plaque de pression (16) et le volant (10) pour fournir au plateau entraîné un entraînement par friction provenant du volant (10) et de la plaque de pression (16); comportant aussi des doigts de débrayage (52, 53) qui s'étendent vers l'intérieur depuis le plateau élastique (51) et des moyens de débrayage (20) pour faire fléchir les doigts (52, 53) pour supprimer la charge élastique agissant sur la plaque de pression (16), et, par là, débrayer l'embrayage, caractérisé en ce que certains doigts (52) sont disposés pour venir au contact des moyens de débrayage sur la totalité de la course de débrayage, tandis que d'autres doigts (53) sont en permanence décalés à une certaine distance des moyens de débrayage dans la condition débrayée de ce débrayage, de sorte que les moyens de débrayage ne les font pas fléchir pendant le mouvement initial de débrayage, mais que ces dits autres doigts (53) viennent en contact sous l'action des moyens de débrayage dans la portion de la course de débrayage où se produit le mouvement de levée de la plaque de pression, de façon à augmenter la raideur effective des doigts (52) et à assurer par là un mouvement de levée plus positif de la plaque de pression, de façon que sur au moins 50% de la course nominale des moyens de débrayage à partir de la condition où ils sont entièrement engagés il n'y ait pas de mouvement significatif de levée de la plaque de pression.

**Patentansprüche**

1. Reibkupplung für ein Kraftfahrzeug zur Verwendung mit einem Motorschwungrad (10), bestehend aus einem an dem Schwungrad (10) befestigten und mit diesem rotierenden Deckel (11), einer Druckscheibe (16), die so gelagert ist, daß sie mit dem Deckel (11) rotiert, einer angetriebenen Scheibe (31, 32, 35) mit ohne Dämpfungsmittel direkt an ihr befestigten, zwischen der Druckscheibe (16) und dem Schwungrad (10) angeordneten Reibbelägen (33, 34), einer Scheibenfeder (24), die zwischen der Druckscheibe (16) und dem Deckel (11) wirksam ist, um die Druckscheibe (16) in Richtung auf das Schwungrad (10) zu drängen, um die angetriebene Scheibe (31, 32, 35) zwischen der Druckscheibe (16) und dem Schwungrad (10) einzuklemmen zwecks Schaffung eines Reibantriebs von dem Schwungrad (10) und der Druckscheibe (16) zu der angetriebenen Scheibe, mit der Scheibenfeder (24) einteilig ausgebildeten und von dieser nach innen sich erstreckenden Auslösefingern (28) und Auslösemitteln (20) zum Biegen der Finger (28), um die Druckscheibe (16) von dem Federdruck zu entlasten und dadurch die Kupplung auszurücken, dadurch gekennzeichnet, daß die Anordnung der Finger (28) so ausgelegt ist, daß diese elastischer sind als die Finger einer herkömmlichen Tellerfeder, dergestalt, daß bei wenigstens 50% der Nennbewegung der Auslösemittel aus voll eingekuppeltem Zustand die Druckscheibe sich nicht wesentlich hebt und dadurch das Einrücken der Kupplung dämpft (Figur 7).

2. Reibkupplung nach Anspruch 1, dadurch gekennzeichnet, daß die einteilig ausgebildete Anordnung von Feder (24) und Fingern (28) in Form einer herkömmlichen Tellerfeder vorgesehen ist, wobei allerdings einige Finger entfernt wurden (Fig. 3).

3. Reibkupplung für ein Kraftfahrzeug zur Verwendung mit einem Motorschwungrad (10), bestehend aus einem an dem Schwungrad (10) befestigten und mit diesem rotierenden Deckel (11), einer Druckscheibe (16), die so gelagert ist, daß sie mit dem Deckel (11) rotiert, einer angetriebenen Scheibe (32, 32, 35) mit ohne Dämpfungsmittel direkt an ihr befestigten, zwischen der Druckscheibe (16) und dem Schwungrad (10) angeordneten Reibbelägen (33, 34), einer Scheibenfeder (24), die zwischen der Druckscheibe (16) und dem Deckel (11) wirksam ist, um die Druckscheibe (16) in Richtung auf das Schwungrad (10) zu drängen, um die angetriebene Scheibe (31, 32, 35) zwischen der Druckscheibe (16) und dem Schwungrad (10) einzuklemmen zwecks Schaffung eines Reibantriebs von dem Schwungrad (10) und der Druckscheibe (16) zu der angetriebenen Scheibe, mit der Scheibenfeder (24) einteilig ausgebildeten und von dieser nach innen sich erstreckenden Auslösefingern (30) und Auslösemitteln (20) zum Biegen der Finger (30), um die Druckscheibe (16) von dem Federdruck zu entlasten und dadurch die Kupplung auszurücken, dadurch gekennzeichnet, daß die Stärke der Finger (30) geringer als die Stärke der Scheiben feder (24) selbst ist, so daß die Elastizität der Finger dergestalt ist, daß bei wenigstens 50% der Nennbewegung der Auslösemittel aus volleingerücken Zustand die Druckscheibe sich nicht wesentlich hebt.

4. Reibkupplung für ein Kraftfahrzeug zur Verwendung mit einem Motorschwungrad (10), bestehend aus einem an dem Schwungrad (10) befestigten und mit diesem rotierenden Deckel (11), einer Druckscheibe (16), die so gelagert ist, daß sie mit dem Deckel (11) rotiert, einer angetriebenen Scheibe (31, 32, 35) mit ohne Dämpfungsmittel direkt an ihr befestigten, zwischen der Druckscheibe (16) und dem Schwungrad (10) angeordneten Reibbelägen (33, 34), einer Scheibenfeder (37), die zwischen der Druckscheibe (16) und dem Deckel (11) wirksam ist, um die Druckscheibe (16) in Richtung auf das Schwungrad (10) zu drängen, um die angetriebene Scheibe (31, 32, 35) zwischen der Druckscheibe (16) und dem Schwungrad (10) einzuklemmen zwecks Schaffung eines Reibantriebs von dem Schwungrad (10) und der Druckscheibe (16) zu der angetriebenen Scheibe, mit der Scheibenfeder (37) einteilig ausgebildeten und von dieser nach innen sich erstreckenden Auslösefingern (38) und Auslösemitteln (20) zum Biegen der Finger (38), um die Druckscheibe (16) von dem Federdruck zu entlasten und dadurch die Kupplung auszurücken, dadurch gekennzeichnet, daß der Abstand zwischen den benachbarten Fingern (38) größer ist als die Breite der Finger (38), dergestalt, daß bei wenigstens 50% der Nennbewegung der Auslösemittel aus voll eingerücktem Zustand die Druckscheibe sich nicht wesentlich hebt.

5. Reibkupplung nach Anspruch 4, dadurch gekennzeichnet, daß die Seiten der Finger (38) parallel verlaufen.

6. Reibkupplung für ein Kraftfahrzeug zur Verwendung mit einem Motorschwungrad (10), bestehend aus einem an dem Schwungrad (10) befestigten und mit diesem rotierenden Deckel (11), einer Druckscheibe (16), die so gelagert ist, daß sie mit dem Deckel (11) rotiert, einer angetriebenen Scheibe (31, 32, 35) mit ohne Dämpfungsmittel direkt an ihr befestigten, zwischen der Druckscheibe (16) und dem Schwungrad (10) angeordneten Reibbelägen (33, 34), einer Scheibenfeder (51), die zwischen der Druckscheibe (16) und dem Deckel (11) wirksam ist, um die Druckscheibe (16) in Richtung auf das Schwungrad (10) zu drängen, um die angetriebene Scheibe (31, 32, 35) zwischen der Druckscheibe (16) und dem Schwungrad (10) einzuklemmen zwecks Schaffung eines Reibantriebs von dem Schwungrad (10) und der Druckscheibe (16) zu der angetriebenen Scheibe, mit der Scheibenfeder (51) einteilig ausgebildeten und von dieser nach innen sich sich erstreckenden Auslösefingern (52, 53) und Auslösemitteln (20) zum Biegen der Finger (52, 53), um die Druckscheibe (16) von dem Federdruck zu entlasten und dadurch die Kupplung auszurücken, dadurch gekennzeichnet, daß einige Finger (52) so angeordnet sind, daß sie während der gesamten Auslösebewegung in die Auslösemittel eingreifen, während andere Finger (53) permanent von den Auslösemitteln in deren ausgerücktem Zustand hinweg versetzt sind, so daß sie von den Auslösemitteln nicht während der anfänglichen Auslösebewegung gebogen werden, während die Auslösemittel in die anderen Finger (53) im Bereich der Auslösebewegung, wo die Druckscheibe sich hebt, eingreifen, um die wirksame Steifigkeit der Finger (52) zu erhöhen und so ein positiveres Anheben der Druckscheibe zu gewährleisten, dergestalt, daß bei wenigstens 50% der Nennbewegung der Auslösemittel aus voll eingekuppeltem Zustand die Druckscheibe sich nicht wesentlich hebt.

FIG.1.

FIG. 2.

FIG. 3.

FIG. 4.

FIG 5

FIG 7.

RELEASE MOVEMENT OF RELEASE MEANS (% OF NOMINAL FULL LIFT)

FIG.6.